# EUROPEAN PATENT APPLICATION

(11) **EP 4 535 675 A1**
(43) Date of publication of application: **09.04.2025**
(21) Application number: 22948375.5
(22) Date of filing: 29.06.2022
(51) Int. Cl.: H04B 5/00

(54) **POWER SUPPLY DEVICE SUPPORTING WIRELESS POWER SUPPLY AND NEAR-FIELD COMMUNICATION**

(71) Applicant: Huawei Digital Power Technologies Co., Ltd., Shenzhen, Guangdong 518043 (CN)
(72) Inventor: ZHANG, Tong, Shenzhen, Guangdong 518043 (CN); FANG, Yaoran, Shenzhen, Guangdong 518043 (CN)
(74) Representative: Gill Jennings & Every LLP
(86) International application number: PCT/CN2022/102308
(87) International publication number: WO 2024/000257

(57) **Abstract**

Embodiments of this application disclose a power supply device that supports wireless power supply and near field communication, including a wireless power supply module, a power supply coil, and a detection module. The wireless power supply module is configured to provide a power supply signal to the power supply coil, to supply power to an electronic device. The detection module is configured to: detect whether a target device exists in a detection area of the power supply device, and detect whether the target device is a PICC device. The target device is a device other than the power supply device and the electronic device. In response to detection information output by the detection module, the power supply device may switch a running mode from a power supply mode to a PICC detection mode or a PICC protection mode. When the power supply device separately runs in the power supply mode, the PICC detection mode, and the PICC protection mode, the wireless power supply module provides the power supply signal with power in descending order to the power supply coil. Embodiments of this application can reduce impact of PICC detection on wireless power supply, and ensure power supply efficiency.

## Description

### TECHNICAL FIELD

Embodiments of this application relate to the field of wireless power supply technologies, and in particular, to a power supply device that supports wireless power supply and near field communication.

### BACKGROUND

Most conventional power supply devices are integrated with functions of wireless power supply and near field communication (near field communication, NFC), and can not only perform wireless power supply to an electronic device, but also transmit data with a proximity integrated circuit card (proximity integrated circuit card, PICC) in another device. Because a magnetic field generated by wireless power supply is usually greater than an NFC magnetic field, the wireless power supply electromagnetic field may damage the PICC in the another device. When performing wireless power supply to the electronic device, the conventional power supply device usually stops performing wireless power supply after detecting that the another device is near the power supply device. This affects power supply efficiency of the power supply device and user experience.

### SUMMARY

Embodiments of this application provide a power supply device that supports wireless power supply and near field communication, to reduce impact of PICC detection on wireless power supply, and ensure wireless power supply efficiency.

According to a first aspect, an embodiment of this application provides a power supply device that supports wireless power supply and near field communication, including a wireless power supply module, a power supply coil, and a detection module. The wireless power supply module is configured to provide a power supply signal to the power supply coil, and the power supply coil supplies power to an electronic device by using the power supply signal. The detection module is configured to: detect whether a target device exists in a detection area of the power supply device, and detect whether the target device is a PICC device. Running modes of the power supply device include a power supply mode, a PICC detection mode, and a PICC protection mode. When the power supply device runs in the power supply mode, in response to detection information output by the detection module, the power supply device switches the running mode from the power supply mode to the PICC detection mode or the PICC protection mode. When the power supply device separately runs in the power supply mode, the PICC detection mode, and the PICC protection mode, the wireless power supply module provides the power supply signal with power in descending order to the power supply coil. The target device is a device other than the power supply device and the electronic device.

In this embodiment of this application, the wireless power supply module in the power supply device can include a plurality of running modes. The running modes specifically include the power supply mode, the PICC detection mode, and the PICC protection mode. In response to the detection information output by the detection module in the power supply device, the power supply device may switch the running mode from the power supply mode to the PICC detection mode or the PICC protection mode. When the wireless power supply module runs in the power supply mode, the PICC detection mode, or the PICC protection mode, the wireless power supply module can provide the power supply signal with power in descending order to the power supply coil, so that the power supply coil generates magnetic fields with different strength to supply power to the electronic device. This can flexibly meet power supply requirements in different running modes. In this way, when performing PICC detection, the power supply device can also continuously perform wireless power supply to the current electronic device. This avoids a power outage of the electronic device. In conclusion, the power supply device provided in this embodiment of this application can ensure PICC detection efficiency without damaging a PICC, and ensure wireless power supply efficiency. This greatly meets user's requirements.

In a possible implementation, in response to that the power supply device runs in the power supply mode, the wireless power supply module provides the power supply signal with first power to the power supply coil. In response to that the power supply device runs in the PICC detection mode, the wireless power supply module provides the power supply signal with second power to the power supply coil. In response to that the power supply device runs in the PICC protection mode, the wireless power supply module provides the power supply signal with third power to the power supply coil. The first power is greater than the second power, and the second power is greater than the third power.

In this embodiment of this application, when the power supply device separately runs in the power supply mode, the PICC detection mode, or the PICC protection mode, the wireless power supply module can provide the power supply signal with power in descending order to the power supply coil, so that the power supply coil generates magnetic fields with different strengths. This flexibly meets power supply requirements in different cases, avoids, during the PICC detection, a case in which charging of the electronic device is interrupted, ensures wireless power supply efficiency without damaging the PICC, and greatly ensures user experience. For example, the third power may be equal to 0. This is equivalent to directly disabling the wireless power supply module, that is, wireless power supply is not performed.

In a possible implementation, the detection information output by the detection module indicates whether the target device other than the power supply device and the electronic device exists in the detection area, or whether the PICC device exists in the detection area of the power supply device.

In this embodiment of this application, the detection information output by the detection module can indicate whether the target device other than the power supply device and the electronic device exists in the detection area of the power supply device, that is, indicate whether a new device enters the detection area; or the detection information can indicate whether the PICC device exists in the detection area. Subsequently, the power supply device can switch to a different running mode in time based on the detection information output by the detection module, to provide the power supply signal with different power to the power supply coil. This meets requirements of PICC detection, wireless power supply, and PICC protection, avoids, during the PICC detection, a case in which charging of the electronic device is interrupted and the PICC is damaged.

In a possible implementation, in response to that the target device exists in the detection area, the detection module outputs the detection information indicating the power supply device to run in the PICC detection mode. In response to that no target device exists in the detection area, the detection module outputs the detection information indicating the power supply device to run in the power supply mode.

In this embodiment of this application, when the detection module detects that the new device enters the detection area, the power supply device can switch to the PICC detection mode, to discover the PICC in time. This prevents the PICC from being damaged. When the detection module detects that no new device enters the detection area, the power supply device can maintain the power supply mode. In an implementation, the power supply device is originally in a standby state, and when the detection module detects that no device enters the detection area, the power supply device can still run in the standby state, that is, wireless power supply is not performed. This can save energy as much as possible.

In a possible implementation, in response to that the target device is the PICC device, the detection module outputs the detection information indicating the power supply device to run in the PICC protection mode. In response to that the target device is not the PICC device, the detection module outputs the detection information indicating the power supply device to run in the power supply mode.

In this embodiment of this application, when the detection module detects that the target device is the PICC device, the power supply device can run in the PICC protection mode, to prevent the PICC from being damaged in time; or when the detection module detects that the target device is not the PICC device, the power supply device can run in the power supply mode. For example, when the detection module fails to detect that the device is the PICC device, the power supply device can continue to run in the PICC detection mode. In this way, in this embodiment of this application, a different running mode can be flexibly switched based on an actual situation. This avoids, during the PICC detection, a case in which charging of the electronic device is interrupted, ensures wireless power supply efficiency without damaging the PICC, and greatly ensures user experience.

In a possible implementation, the detection module includes: a sensor module, configured to: detect whether the target device other than the power supply device and the electronic device exists in the detection area, and output a sensor detection signal; and a near field communication module, configured to: detect whether the target device in the detection area is the PICC device, and output a near field communication module detection signal.

In this embodiment of this application, the detection module can specifically include the sensor module and the near field communication module. The sensor module can monitor in real time whether the device enters the detection area of the power supply device, and output the sensor detection signal, that is, a detection result of a sensor. The near field communication module can be configured to: detect whether the device that enters the detection area is the PICC device, and output the near field communication module detection signal, that is, a detection result of the near field communication module. Subsequently, the power supply device can switch to a different running mode in time based on detection results output by the sensor module and the near field communication module, to provide the power supply signal with different power to the power supply coil. This avoids a case in which charging of the electronic device is interrupted and the PICC is damaged during the PICC detection.

In a possible implementation, the detection module is configured to: in response to the sensor detection signal, output the detection information indicating the power supply device to run in the PICC detection mode or the power supply mode; and in response to the near field communication module detection signal, output the detection information indicating the power supply device to run in the PICC protection mode or the power supply mode.

In this embodiment of this application, in response to the sensor detection signal, namely, in response to the detection result output by the sensor module, the power supply device can switch to a different running mode. In response to the near field communication module detection signal, namely, in response to the detection result output by the near field communication module, the power supply device can switch to a different running mode. This meets power supply requirements in different cases, and avoids a case in which charging of the electronic device is interrupted and the PICC is damaged during the PICC detection.

In a possible implementation, the detection information includes at least one of the sensor detection signal and the near field communication module detection signal. In response to that the detection information includes the sensor detection signal, the power supply device runs in the PICC detection mode or the power supply mode. In response to that the detection information includes the near field communication module detection signal, the power supply device runs in the PICC protection mode or the power supply mode.

In this embodiment of this application, the detection information output by the detection module can include the at least one of the sensor detection signal and the near field communication module detection signal. In response to the sensor detection signal, the power supply device can switch to a different running mode. In response to the near field communication module detection signal, the power supply device can switch to a different running mode. This meets power supply requirements in different cases, and avoids a case in which charging of the electronic device is interrupted and the PICC is damaged during the PICC detection.

In a possible implementation, in response to that the detection information includes the sensor detection signal, the wireless power supply module provides the power supply signal with the first power or the second power to the power supply coil; and in response to that the detection information includes the near field communication module detection signal, the wireless power supply module provides the power supply signal with the first power or the third power to the power supply coil.

In this embodiment of this application, in response to the sensor detection signal, the power supply device can provide the power supply signal with different power to the power supply coil, to meet a power supply requirement of PICC detection or wireless power supply. This avoids a case in which charging of the electronic device is interrupted during the PICC detection. In response to the near field communication module detection signal, the power supply device can provide the power supply signal with different power to the power supply coil. This meets power supply requirements of wireless power supply and PICC protection, ensures efficient power supply to the electronic device, and avoid a case in which the PICC is damaged.

In a possible implementation, the power supply device further includes: a control module, configured to control, in response to the detection information output by the detection module, the power supply device to run in the power supply mode, the PICC detection mode, or the PICC protection mode.

In this embodiment of this application, the power supply device can further include the control module. The control module can control, based on the detection information output by the detection module, to switch the running mode of the power supply device. This meets power supply requirements in different cases. This avoids, during the PICC detection, a case in which charging of the electronic device is interrupted, ensures wireless power supply efficiency without damaging the PICC.

In a possible implementation, the control module is configured to: control, in response to that the detection information includes the sensor detection signal, the power supply device to run in the PICC detection mode or the power supply mode; and control, in response to that the detection information includes the near field communication module detection signal, the power supply device to run in the PICC protection mode or the power supply mode.

In this embodiment of this application, the control module can control, in response to the detection result output by the sensor module in the detection module, the power supply device to run in the PICC detection mode or the power supply mode. The control module can control, in response to the detection result output by the near field communication module in the detection module, the power supply device to run in the PICC protection mode or the power supply mode. In this embodiment of this application, a controller can be used to flexibly switch to a different running mode based on different detection results. This meets power supply requirements in different cases.

In a possible implementation, the control module is configured to: control, in response to that the detection information includes the sensor detection signal, the wireless power supply module to provide the power supply signal with the first power or the second power to the power supply coil; and control, in response to that the detection information includes the near field communication module detection signal, the wireless power supply module to provide the power supply signal with the first power or the third power to the power supply coil.

In this embodiment of this application, the control module can control, in response to the detection result output by the sensor module in the detection module, the wireless power supply module to provide the power supply signal with different power to the power supply coil, so that the power supply coil generates magnetic fields with different strengths. The control module can control, in response to the detection result output by the near field communication module in the detection module, the wireless power supply module to provide the power supply signal with different power to the power supply coil, so that the power supply coil generates magnetic fields with different strengths. In this way, in this embodiment of this application, the controller can be used to provide the power supply signal with different power based on different detection results. This meets power supply requirements in different cases, avoids, during the PICC detection, a case in which charging of the electronic device is interrupted, ensures wireless power supply efficiency without damaging the PICC.

According to a second aspect, an embodiment of this application provides a power supply device, including a wireless power supply module, a power supply coil, a detection module, and a control module. The wireless power supply module is configured to provide a power supply signal to the power supply coil, and the power supply coil supplies power to an electronic device by using the power supply signal. The detection module is configured to: detect whether a target device exists in a detection area of the power supply device, and detect whether the target device is a PICC device. The control module is configured to: control the wireless power supply module to provide the power supply signal with first power to the power supply coil, and control, in response to detection information output by the detection module, the wireless power supply module to provide the power supply signal with second power or the power supply signal with third power to the power supply coil. The target device is a device other than the power supply device and the electronic device, the first power is greater than the second power, and the second power is greater than the third power.

In a possible implementation, the detection module includes a sensor module and a near field communication module. The sensor module is configured to detect whether the target device exists in the detection area. The near field communication module is configured to detect whether the target device in the detection area is the PICC device. The detection module is configured to output the detection information based on detection results of the sensor module and the near field communication module. The detection information indicates whether the target device exists in the detection area or indicates whether the target device is the PICC device.

In a possible implementation, the control module is configured to: control, in response to that the detection information indicates that the target device exists in the detection area, the wireless power supply module to provide the power supply signal with the second power to the power supply coil; and control, in response to that the detection information indicates that the target device is the PICC device, the wireless power supply module to provide the power supply signal with third power to the power supply coil.

It should be understood that in which the power supply device provided in the second aspect of this application is consistent with the technical solution in the first aspect of this application. For specific content and beneficial effect of the power supply device, refer to the power supply device provided in the first aspect. Details are not described herein again.

According to a third aspect, an embodiment of this application provides a wireless power supply and PICC detection method, applied to a power supply device. The power supply device includes a wireless power supply module, a power supply coil, and a detection module. Running modes of the power supply device include a power supply mode, a PICC detection mode, and a PICC protection mode. The method includes: providing a power supply signal to the power supply coil by using the wireless power supply module, where the power supply coil supplies power to an electronic device by using the power supply signal; detecting, by using the detection module, whether a target device exists in a detection area of the power supply device, and detecting whether the target device is a PICC device, where the target device is a device other than the power supply device and the electronic device; when the power supply device runs in the power supply mode, switching a running mode of the power supply device from the power supply mode to the PICC detection mode or the PICC protection mode; and when the power supply device separately runs in the power supply mode, the PICC detection mode, and the PICC protection mode, the wireless power supply module provides the power supply signal with power in descending order to the power supply coil.

It should be understood that the method procedure provided in the third aspect of this application is consistent with the technical solution in the first aspect of this application. For specific content and beneficial effect of the method procedure, refer to the power supply device provided in the first aspect. Details are not described herein again.

According to a fourth aspect, an embodiment of this application provides a power supply device. The power supply device may include a processor and a memory. The memory is configured to store program code, and the processor is configured to invoke the program code to implement functions related to the wireless power supply and PICC detection method procedure provided in the third aspect. The power supply device may further include a communication interface, configured to perform communication between the power supply device and another device or a communication network.

According to a fifth aspect, an embodiment of this application provides a computer-readable storage medium. The computer-readable storage medium stores a computer program. When the computer program is executed by a processor, functions related to the wireless power supply and PICC detection method procedure provided in the third aspect are implemented.

According to a sixth aspect, an embodiment of this application provides a computer program. The computer program includes instructions. When the instructions are executed by a computer, the computer can perform functions related to the wireless power supply and PICC detection method procedure provided in the third aspect.

According to a seventh aspect, an embodiment of this application provides a chip. The chip includes a processor and a communication interface. The processor is configured to invoke instructions from the communication interface and run the instructions. When the processor executes the instructions, the chip is enabled to perform functions related to the wireless power supply and PICC detection method procedure provided in the third aspect.

According to an eighth aspect, an embodiment of this application provides a chip system. The chip system includes the power supply device according to any one of the first aspect or the second aspect, and is configured to implement functions related to the wireless power supply and PICC detection method procedure provided in the third aspect. In a possible design, the chip system further includes a memory. The memory is configured to store program instructions and data that are necessary for the wireless power supply and PICC detection method. The chip system may include a chip, or may include a chip and another discrete component.

### BRIEF DESCRIPTION OF DRAWINGS

To describe the technical solutions in embodiments of this application more clearly, the following describes the accompanying drawings for describing embodiments of this application or the background.
FIG. 1 is a schematic diagram of an application scenario according to an embodiment of this application;
FIG. 2 is a schematic diagram of time domain waveforms in a PICC detection process;
FIG. 3 is a schematic diagram of a structure of a power supply device according to an embodiment of this application;
FIG. 4 is a schematic diagram of time domain waveforms in a PICC detection process according to an embodiment of this application;
FIG. 5 is a schematic diagram of a structure of another power supply device according to an embodiment of this application;
FIG. 6 is a schematic diagram of a structure of still another power supply device according to an embodiment of this application;
FIG. 7 is a schematic flowchart of a wireless power supply and PICC detection method according to an embodiment of this application;
FIG. 8 is a schematic diagram of a power change of a power supply signal according to an embodiment of this application;
FIG. 9 is a schematic diagram of a power change of another power supply signal according to an embodiment of this application; and
FIG. 10 is a schematic flowchart of another wireless power supply and PICC detection method according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

Mentioning an "embodiment" in the specification means that a particular characteristic, structure, or feature described with reference to the embodiment may be included in at least one embodiment of the present invention. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

Some terms in this application are first described, to help persons skilled in the art have a better understanding.
(1) A wireless power supply technology, or a magnetic induction wireless charging (wireless power transfer, WPT) technology, is a technology in which an alternating current magnetic field generated by a transmitting coil in a power supply device is coupled to a receiving coil in an electronic device for energy transmission.
(2) An NFC technology is a technology in which an alternating current magnetic field generated by a transmitting coil in a card reader (proximity coupling device, PCD) is coupled to a receiving coil in a proximity integrated circuit card (proximity integrated circuit card, PICC) for data transmission.

To facilitate understanding embodiments of this application, the following further analyzes and proposes a technical problem to be specifically resolved in this application. As described above, currently, most power supply devices are integrated with the wireless power supply technology and the NFC technology. In addition, to prevent a wireless power supply electromagnetic field from damaging a nearby PICC, the power supply device usually needs to perform PICC detection. For example, when detecting that a PICC exists nearby, a power supply device immediately disables wireless power supply, to protect the PICC from being damaged by a wireless power supply electromagnetic field.

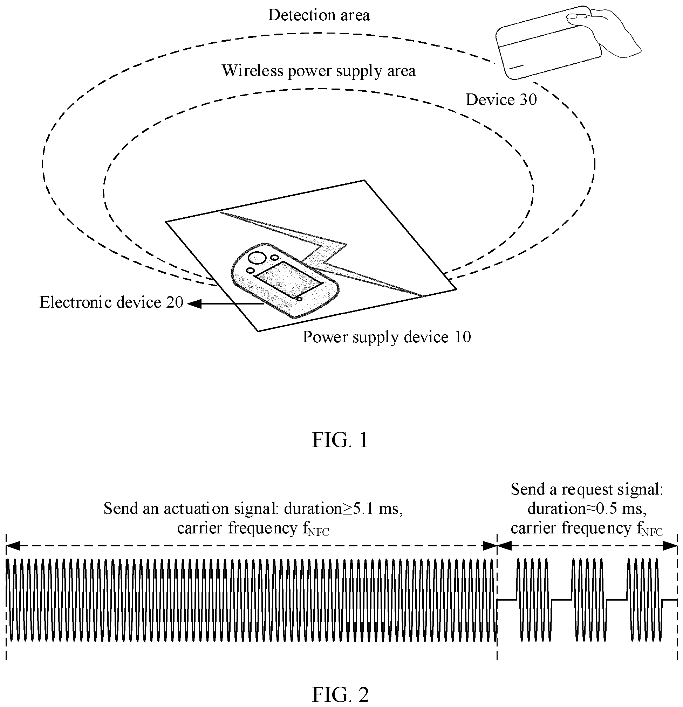

FIG. 1 is a schematic diagram of an application scenario according to an embodiment of this application. As shown in FIG. 1, the application scenario may include a power supply device 10, an electronic device 20, and a device 30. The power supply device 10 has a wireless power supply function and a near field communication function. The power supply device 10 may perform wireless power supply to the electronic device 20, and may perform data communication with the device 30 by transmitting an NFC signal.

The electronic device 20 has a wireless charging function. For example, a battery is installed in the electronic device 20. For example, the electronic device 20 may be a wearable device such as a smartphone, a tablet computer (tablet computer), a laptop computer (laptop computer), a smartwatch, a smart band, a smart helmet, smart glasses, or a Bluetooth headset, or may be an electric vehicle, an unmanned aerial vehicle, or a robotic vacuum cleaner. The battery in the electronic device 20 may be any one of a lead-acid battery, a nickel cadmium alkaline battery, a nickel-iron battery, a nickel/metal hydride battery, a lithium-ion battery, or the like. For example, no battery is installed in the electronic device 20. For example, the electronic device 20 may be a desktop computer, a landline telephone, a radio frequency identification (radio frequency identification, RFID) card, or the like.

The device 30 includes a proximity integrated circuit card, and the device 30 is a PICC device. For example, the device 30 may be a device including a PICC, such as a student card, a meal card, a bus card, a bank card, or an identity card.

As shown in FIG. 1, the power supply device 10 performs wireless power supply to the electronic device 20, and the device 30 enters a detection area of the power supply device 10. It should be noted that a conventional electronic device having an NFC function usually has a PICC protection function inside the electronic device. Therefore, when the power supply device 10 performs wireless power supply to the electronic device 20, the NFC function of the electronic device 20 is not damaged. As shown in FIG. 1, the detection area of the power supply device 10 is greater than a wireless power supply area. When any device enters the detection area of the power supply device 10, the power supply device 10 may disable wireless power supply in time, to prevent a wireless power supply electromagnetic field from damaging the PICC device.

After the power supply device 10 finds that the device 30 enters the detection area of the power supply device 10, and the power supply device 10 stops wirelessly supplying power to the electronic device 20. Correspondingly, the electronic device 20 does not have power supply. After the power supply device 10 stops wirelessly supplying power to the electronic device 20, the power supply device 10 starts to transmit a carrier frequency signal to the device 30.

FIG. 2 is a schematic diagram of time domain waveforms in a PICC detection process. First, the power supply device 10 transmits an actuation signal whose carrier frequency is f_{NFC} to the device 30. Then, the power supply device 10 transmits a request (request, REQ) signal whose carrier frequency is f_{NFC} to the device 30. For example, the actuation signal is used to supply power to the device 30, and the actuation signal lasts for at least 5.1 ms, so that the device 30 stores sufficient power to communicate with the power supply device 10. The request signal usually lasts for 0.5 ms. f_{NFC} is 13.56 MHz. Finally, the power supply device 10 receives an answer to request (answer to request, ATQ) signal sent by the device 30, and the power supply device 10 determines that the device 30 is a PICC device. In this case, the power supply device 10 ends PICC detection. Subsequently, data may be transmitted between the power supply device 10 and the device 30.

As described above, after finding that the device 30 enters the detection area of the power supply device 10, the power supply device 10 stops wirelessly supplying power to the electronic device 20. Consequently, charging of the electronic device 20 that is originally receiving power supply is lost or interrupted. This severely affects wireless power supply efficiency and user experience.

It should be noted that, to prevent interference of a wireless power supply electromagnetic field on the request signal and the answer to request signal, and ensure accuracy of PICC detection, the power supply device 10 needs to stop wirelessly supplying power to the electronic device 20 in a period of sending the request signal and waiting for the answer to request signal. As shown in FIG. 2, the request signal lasts only 0.5 ms, and during this period, impact of stopping performing charging to the electronic device 20 on wireless power supply efficiency may be ignored. However, duration of the actuation signal is much longer than duration of the request signal. If the power supply device 10 stops wirelessly charging the electronic device 20 for a long time, wireless power supply efficiency is affected, and use experience is reduced.

To resolve the foregoing problem, embodiments of this application provide a power supply device, to reduce impact of a PICC device on wireless power supply efficiency, and improve user experience.

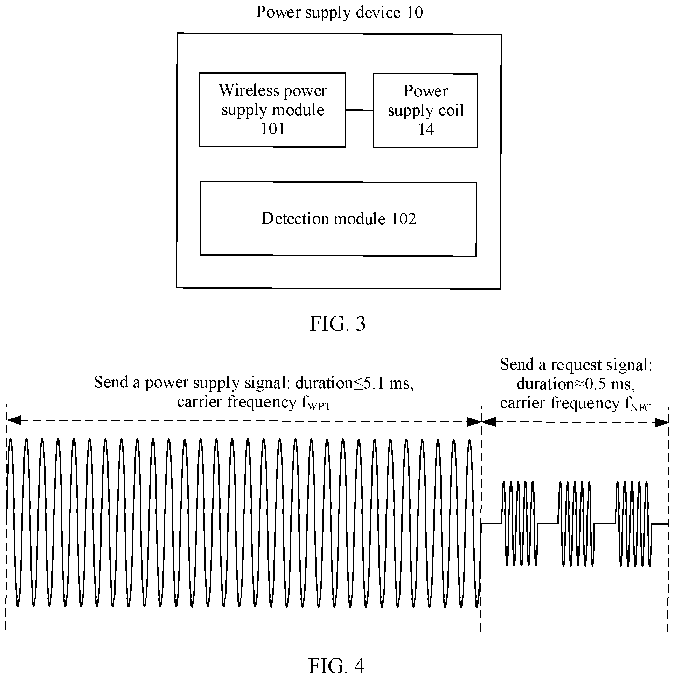

FIG. 3 is a schematic diagram of a structure of a power supply device according to an embodiment of this application. The technical solutions in embodiments of this application may be specifically implemented in the structure shown in FIG. 3 or a similar structure. A power supply device 10 may be the power supply device 10 shown in FIG. 1. As shown in FIG. 3, the power supply device 10 may include a wireless power supply module 101, a power supply coil 14, and a detection module 102. The wireless power supply module 101 is connected to the power supply coil 14.

The wireless power supply module 101 is configured to provide a power supply signal to the power supply coil 14. The power supply coil 14 is configured to: receive the power supply signal provided by the wireless power supply module 101, and generate a corresponding wireless power supply electromagnetic field by using the power supply signal, to supply power to an electronic device 20. In an implementation, the wireless power supply module 101 may provide the power supply signal with different power to the power supply coil 14, so that the power supply coil 14 generates wireless power supply electromagnetic fields with different strength.

The detection module 102 is configured to: detect whether a target device exists in a detection area of the power supply device 10, detect whether the target device is a PICC device, and output corresponding detection information. The target device is a device other than the power supply device 10 and the electronic device 20 that is receiving power supply. In this embodiment of this application, the target device may be the PICC device or may not be the PICC device. For example, the target device may be the device 30 in FIG. 1.

In an embodiment, in response to that the target device exists in the detection area of the power supply device 10, the detection module 102 outputs the detection information indicating that the target device exists in the detection area of the power supply device 10.

In an embodiment, in response to that no target device exists in the detection area of the power supply device 10, the detection module 102 outputs the detection information indicating that no target device exists in the detection area of the power supply device 10.

In an embodiment, in response to that the target device in the detection area is the PICC device, the detection module 102 outputs the detection information indicating that the target device is not the PICC device.

In an embodiment, in response to that the target device in the detection area is not the PICC device, the detection module 102 outputs the detection information indicating that the target device is not PICC device.

In this embodiment of this application, running modes of the power supply device 10 can include a power supply mode, a PICC detection mode, and a PICC protection mode. In an implementation, when the power supply device 10 separately runs in the power supply mode, the PICC detection mode, and the PICC protection mode, the wireless power supply module 101 may separately provide the power supply signal with different power to the power supply coil 14. For example, when the power supply device 10 separately runs in the power supply mode, the PICC detection mode, and the PICC protection mode, the wireless power supply module 101 may provide the power supply signal with power in descending order to the power supply coil 14. It should be noted that, as shown in FIG. 2, no data is transmitted between the power supply device 10 and the device 30 when the power supply device 10 sends an actuation signal. Therefore, impact of the wireless power supply electromagnetic field on the actuation signal can be ignored, and even the wireless power supply electromagnetic field can be directly used to replace the actuation signal to supply power to the device 30. In this way, when the power supply device 10 provided in embodiments of this application runs in the PICC detection mode, the wireless power supply module 101 in the power supply device 10 can still provide the power supply signal to the power supply coil 14, to generate the wireless power supply electromagnetic field to supply power to the electronic device 20 and the device 30.

In this embodiment of this application, the power supply device 10 can switch to a different running mode based on the detection information output by the detection module 102. In an implementation, in response to the detection information output by the detection module 102, the power supply device 10 may run in the power supply mode, the PICC detection mode, or the PICC protection mode.

In an implementation, when the power supply device 10 runs in the power supply mode, and in response to the detection information output by the detection module 102, the power supply device 10 may switch the running mode from the power supply mode to the PICC detection mode or the PICC protection mode.

In an implementation, when the power supply device 10 runs in the power supply mode, and in response to the detection information output by the detection module 102, the power supply device 10 may switch the running mode from the power supply mode to the PICC detection mode, or maintain the power supply mode. In an implementation, when the power supply device 10 runs in the PICC detection mode, and in response to the detection information output by the detection module 102, the power supply device 10 may switch the running mode from the PICC detection mode to the PICC protection mode or the power supply mode.

In an implementation, the detection information output by the detection module 102 may indicate whether a target device other than the power supply device 10 and the electronic device 20 exists in the detection area of the power supply device 10. In response to the detection information output by the detection module 102, the power supply device 10 may run in the power supply mode or the PICC detection mode.

In an embodiment, in response to that the target device exists in the detection area of the power supply device 10, the detection module 102 outputs the detection information indicating the power supply device 10 to run in the PICC detection mode.

In an embodiment, in response to that no target device exists in the detection area of the power supply device 10, the detection module 102 outputs the detection information indicating the power supply device 10 to run in the power supply mode.

For example, the detection module 102 detects that the target device exists in the detection area of the power supply device 10, and in response to the detection information output by the detection module 102, the power supply device 10 runs in the PICC detection mode. For example, the detection module 102 detects that no target device exists in the detection area of the power supply device 10, and in response to the detection information output by the detection module 102, the power supply device 10 runs in the power supply mode.

In an implementation, the detection information output by the detection module 102 may be used to indicate whether the PICC device exists in the detection area of the power supply device 10, that is, indicate whether the target device that enters the detection area is the PICC device. In response to the detection information output by the detection module 102, the power supply device 10 may run in the PICC protection mode, the power supply mode, or the PICC detection mode.

In an embodiment, in response to that the target device in the detection area is the PICC device, the detection information output by the detection module 102 indicates the power supply device 10 to run in the PICC protection mode.

In an embodiment, in response to that the target device in the detection area is not the PICC device, the detection information output by the detection module 102 indicates the power supply device 10 to run in the power supply mode.

For example, the detection module 102 detects that the target device is the PICC device, and in response to the detection information output by the detection module 102, the power supply device 10 runs in the PICC protection mode. For example, the detection module 102 detects that the target device is not the PICC device, and in response to the detection information output by the detection module 102, the power supply device 10 runs in the power supply mode. For example, the detection module 102 does not detect whether that the target device is a PICC device, and in response to the detection information output by the detection module 102, the power supply device 10 may maintain the PICC detection mode.

The following describes the power supply device 10 in embodiments of this application with reference to FIG. 1 and FIG. 3. The running modes of the power supply device 10 include the power supply mode, the PICC detection mode, and the PICC protection mode.

The power supply device 10 runs in the power supply mode. In this case, the wireless power supply module 101 in the power supply device 10 provides a power supply signal to the power supply coil 14, so that the power supply coil 14 generates a wireless power supply electromagnetic field to supply power to the electronic device 20. For example, the power supply device 10 runs in the power supply mode, and the wireless power supply module 101 may provide the power supply signal with first power to the power supply coil 14.

As shown in FIG. 1, the device 30 enters the detection area of the power supply device 10. After the detection module 102 in the power supply device 10 detects that the device 30 enters the detection area, the power supply device 10 switches to the PICC detection mode. When the power supply device 10 runs in the PICC detection mode, power of a power supply signal provided by the wireless power supply module 101 to the power supply coil 14 may remain unchanged or be appropriately reduced, so that the power supply coil 14 continuously generates the wireless power supply electromagnetic field to supply power to the electronic device 20 and the device 30. For example, the power supply device 10 runs in the PICC detection mode, and the wireless power supply module 101 may provide the power supply signal with second power to the power supply coil 14. The first power may be greater than the second power.

When the power supply device 10 runs in the PICC detection mode, the detection module 102 may detect whether the device 30 is a PICC device, and output corresponding detection information. For example, FIG. 4 is a schematic diagram of time domain waveforms in a PICC detection process according to this embodiment of this application. As shown in FIG. 4, the wireless power supply module 101 in the power supply device 10 may provide a power supply signal with second power to the power supply coil 14, so that the power supply coil 14 generates the wireless power supply electromagnetic field to supply power to the electronic device 20 and the device 30. As shown in FIG. 4, a carrier frequency of the power supply signal may be f_{WPT}. Then, the wireless power supply module 101 in the power supply device 10 is disabled, and the detection module 102 may detect, by transmitting a request signal for one or more times, whether the device 30 is the PICC device, and output corresponding detection information.

If the detection information output by the detection module 102 indicates that the device 30 is the PICC device, the power supply device 10 switches to the PICC protection mode. When the power supply device 10 runs in the PICC protection mode, the wireless power supply module 101 may provide a power supply signal with extremely low power to the power supply coil 14, and even the power supply device 10 may directly disable the wireless power supply module 101 until the PICC leaves the detection area. This effectively prevents the PICC from being damaged, prolongs a service life of the PICC device, and ensures use experience and property safety. For example, when the power supply device 10 runs in the PICC protection mode, the wireless power supply module 101 may provide the power supply signal with third power to the power supply coil 14, and the second power may be greater than the third power. For example, the third power may be 0. This is equivalent to directly disabling the wireless power supply module 101. Correspondingly, if the detection information output by the detection module 102 indicates that the device 30 is not the PICC device, the power supply device 10 may switch back to the power supply mode. If the detection information output by the detection module 102 indicates whether the device 30 is the PICC device cannot be determined, the power supply device 10 may maintain the PICC detection mode.

As described above, the power of the power supply signal provided by the wireless power supply module 101 in the power supply mode can be large, to implement efficient power supply to the electronic device 20. The power of the power supply signal provided by the wireless power supply module 101 in the PICC detection mode can be equal to or less than the power of the power supply signal provided in the power supply mode, to ensure continuous power supply to the electronic device 20 and prevent damage to a possible PICC device as much as possible. The power of the power supply signal provided by the wireless power supply module 101 in the PICC protection mode can be extremely low or even zero, to prevent damage to the PICC device.

For example, the electronic device 20 is the smartphone shown in FIG. 1, or a Bluetooth headset, a tablet computer, a desktop computer, or the like. A power supply scenario is usually an indoor scenario. The power supply device 10 may be usually installed in a living room, a bedroom, a classroom, a shopping mall, a library, a canteen, a bank, an operating room, or a ward. For example, the power supply scenario is the library, and the device 30 may be a PICC device such as a student card or a book debit card. For example, the power supply scenario is the canteen, and the device 30 may be a PICC device such as a meal card. For example, the power supply scenario is a hospital, and the device 30 may be a PICC device such as a medical insurance card or an identity card. For example, the power supply scenario is the bank, and the device 30 may be a PICC device such as a bank card or an identity card. Details are not described herein again.

For example, the electronic device 20 is an electric vehicle, and a power supply scenario may be usually a private garage, a public parking lot, or the like. For example, the power supply scenario is the private garage or an underground public parking lot, and the device 30 may be a PICC device such as a vehicle unlocking card or a bus card.

In conclusion, the power supply device 10 provided in embodiments of this application includes a plurality of running modes, and the power supply device 10 in different running modes, can provide the power supply signal with different power. In this way, the power supply device 10 can still continuously perform wireless power supply to the current electronic device 20 during the PICC detection. This avoids a case in which charging of the electronic device 20 is lost or is interrupted. In this embodiment of this application, PICC detection efficiency can be ensured without damaging the PICC device, and wireless power supply efficiency can be ensured. This greatly meets user's requirements.

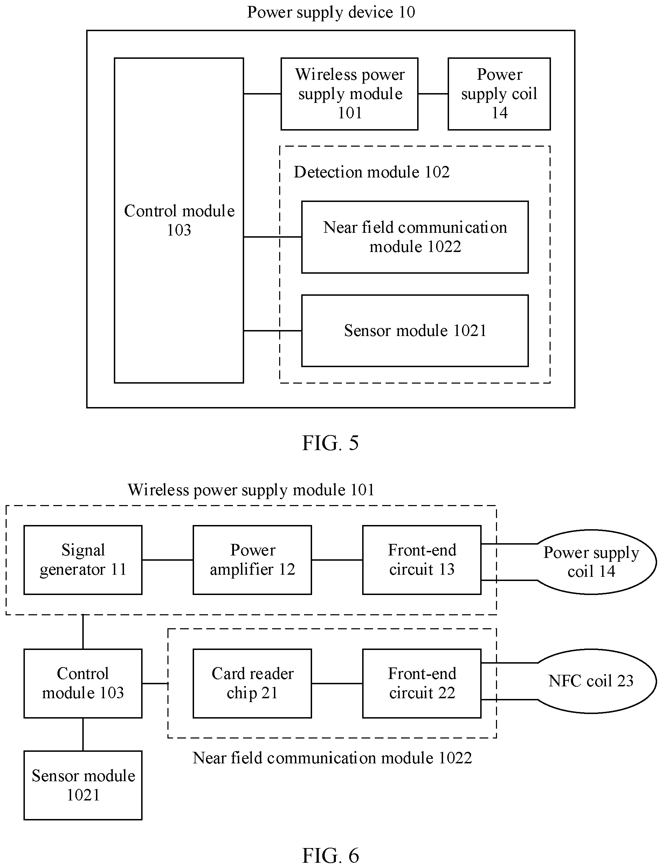

FIG. 5 is a schematic diagram of a structure of another power supply device according to an embodiment of this application. The technical solutions in embodiments of this application may be specifically implemented in the structure shown in FIG. 5 or a similar structure. A power supply device 10 may be the power supply device 10 shown in FIG. 1. As shown in FIG. 5, the power supply device 10 may include a wireless power supply module 101, a power supply coil 14, a detection module 102, and a control module 103. The detection module 102 may include a sensor module 1021 and a near field communication module 1022. For specific functions of the wireless power supply module 101 and the power supply coil 14, refer to the descriptions in the embodiment corresponding to FIG. 3. Details are not described herein again.

As shown in FIG. 5, the wireless power supply module 101 may be connected to the power supply coil 14 in the power supply device 10, and the control module 103 may be separately connected to the wireless power supply module 101, the sensor module 1021, and the near field communication module 1022. In an implementation, the near field communication module 1022 may be connected to an NFC coil.

The sensor module 1021 is configured to: detect whether a target device other than the power supply device 10 and an electronic device 20 exists in a detection area of the power supply device 10, and output a corresponding sensor detection signal to the control module 103, that is, output a detection result of the sensor module 1021 to the control module 103. For example, the sensor module 1021 may specifically include one or more capacitive sensors, and may efficiently and accurately detect, based on a change of a dielectric constant in the detection area, whether the target device enters the detection area.

In an implementation, in response to that the target device exists in the detection area of the power supply device 10, the sensor detection signal output by the sensor module 1021 indicates that the target device exists in the detection area of the power supply device 10.

In an implementation, in response to that no target device exists in the detection area of the power supply device 10, the sensor detection signal output by the sensor module 1021 indicates that no target device exists in the detection area of the power supply device 10.

The near field communication module 1022 is configured to: detect whether the target device that enters the detection area is a PICC device, and output a corresponding near field communication module detection signal to the control module 103, that is, output a detection result of the near field communication module 1022 to the control module 103. For example, the near field communication module 1022 may send a request signal, and wait for the target device to send a corresponding request reply signal. If the near field communication module 1022 receives the answer to request signal sent by the target device, it may be determined that the target device is the PICC device.

In an implementation, in response to that the target device in the detection area is the PICC device, the near field communication module detection signal output by the near field communication module 1022 indicates that the target device is the PICC device.

In an implementation, in response to that the target device in the detection area is not the PICC device, the near field communication module detection signal output by the near field communication module 1022 indicates that the target device is not the PICC device.

The control module 103 is configured to control power of a power supply signal provided by the wireless power supply module 101. In an implementation, the control module 103 controls, in response to the detection information output by the detection module 102, the power of the power supply signal provided by the wireless power supply module 101. In an implementation, the control module 103 controls, in response to the detection result output by the sensor module 1021 in the detection module 102, the power of the power supply signal provided by the wireless power supply module 101. In an implementation, the control module 103 controls, in response to the detection result output by the sensor module 1021 in the detection module 102, the power of the power supply signal provided by the wireless power supply module 101.

In this embodiment of this application, running modes of the power supply device 10 can include a power supply mode, a PICC detection mode, and a PICC protection mode. In an implementation, when the power supply device 10 separately runs in the power supply mode, the PICC detection mode, and the PICC protection mode, the wireless power supply module 101 may separately provide the power supply signal with different power to the power supply coil 14. In an implementation, when the power supply device 10 separately runs in the power supply mode, the PICC detection mode, and the PICC protection mode, the wireless power supply module 101 may provide the power supply signal with power in descending order to the power supply coil 14.

In this embodiment of this application, the power supply device 10 can switch to a different running mode based on the detection information output by the detection module 102. In an implementation, in response to the detection information output by the detection module 102, the power supply device 10 may run in the power supply mode, the PICC detection mode, or the PICC protection mode.

In an implementation, the detection information output by the detection module 102 may include the sensor detection signal output by the sensor module 1021, that is, include the detection result of the sensor module 1021.

In an implementation, in response to the detection result of the sensor module 1021, the detection module 102 outputs detection information indicating the power supply device 10 to run in the PICC detection mode or the power supply mode.

In an implementation, the control module 103 controls, in response to the detection result output by the sensor module 1021, the wireless power supply module 101 to provide the power supply signal with first power to the power supply coil 14. In this case, the power supply device 10 runs in the power supply mode. In an implementation, the control module 103 controls, in response to the detection result output by the sensor module 1021, the wireless power supply module 101 to provide the power supply signal with second power to the power supply coil 14. In this case, the power supply device 10 runs in the PICC detection mode. The first power may be greater than or equal to the second power.

For example, the sensor module 1021 detects that the target device other than the power supply device 10 and the electronic device 20 exists in the detection area, and the control module 103 controls, in response to the detection result output by the sensor module 101, the wireless power supply module 101 to provide the power supply signal with the second power to the power supply coil 14. In this case, the power supply device 10 runs in the PICC detection mode.

For example, the sensor module 1021 detects that no target device other than the power supply device 10 and the electronic device 20 exists in the detection area, and the control module 103 controls, in response to the detection result output by the sensor module 1021, the wireless power supply module 101 to provide the power supply signal with the first power to the power supply coil 14. In this case, the power supply device 10 runs in the power supply mode.

In an implementation, the detection information output by the detection module 102 may include the near field communication module detection signal output by the near field communication module 1022, that is, include the detection result of the near field communication module 1022.

In an implementation, in response to the detection result output by the near field communication module 1022, the detection module 102 outputs detection information indicating the power supply device 10 to run in the PICC protection mode or the power supply mode.

In an implementation, the control module 103 controls, in response to the detection result output by the near field communication module 1022, the wireless power supply module 101 to provide a power supply signal with third power to the power supply coil 14. In this case, the power supply device 10 runs in the PICC protection mode. In an implementation, the wireless power supply module 101 is controlled, in response to the detection result output by the near field communication module 1022, to provide the power supply signal with the first power to the power supply coil 14. In this case, the power supply device 10 runs in the power supply mode. In an implementation, the control module 103 controls, in response to the detection result output by the near field communication module 1022, the wireless power supply module 101 to provide the power supply signal with the second power to the power supply coil 14. In this case, the power supply device 10 runs in the PICC detection mode. The third power may be greater than or equal to 0, and is less than the second power. For example, that the third power is 0 is equivalent to that the wireless power supply module 101 does not provide a power supply signal to the power supply coil, that is, is equivalent to that the wireless power supply module 101 is disabled.

For example, the near field communication module 1022 detects that the target device is the PICC device, and the control module 103 controls, in response to the detection result output by the near field communication module 1022, the wireless power supply module 101 to provide the power supply signal with the third power to the power supply coil. In this case, the power supply device 10 runs in the PICC protection mode.

For example, the near field communication module 1022 detects that the target device is not the PICC device, and the control module 103 controls, in response to the detection result output by the near field communication module 1022, the wireless power supply module 101 to provide the power supply signal with the first power to the power supply coil. In this case, the power supply device 10 runs in the power supply mode.

For example, the near field communication module 1022 does not detect whether that the target device is the PICC device, and the control module 103 controls, in response to the detection result output by the near field communication module 1022, the wireless power supply module 101 to provide the power supply signal with the second power to the power supply coil. In this case, the power supply device 10 runs in the PICC detection mode.

The following describes the power supply device 10 in embodiments of this application with reference to FIG. 1 and FIG. 5. The running modes of the power supply device 10 include the power supply mode, the PICC detection mode, and the PICC protection mode.

The power supply device 10 runs in the power supply mode. In this case, the control module 103 in the power supply device 10 controls the wireless power supply module 101 to provide the power supply signal with the first power to the power supply coil 14, so that the power supply coil 14 generates a corresponding wireless power supply electromagnetic field to supply power to the electronic device 20. In addition, after the power supply device 10 is powered on, the sensor module 1021 in the power supply device 10 may be always in a running state, to monitor in real time whether a device enters the detection area.

As shown in FIG. 1, the device 30 enters the detection area of the power supply device 10. The sensor module 1021 in the power supply device 10 detects that the device 30 enters the detection area. The control module 103 may control, in response to a detection result output by the sensor module 1021, the wireless power supply module 101 to output a power supply signal with the first power to the power supply coil 14, so that the power supply coil 14 generates a corresponding wireless power supply electromagnetic field to supply power to the electronic device 20 and the device 30. Then, the control module 103 may further control the near field communication module 1022 to detect whether the device 30 is the PICC device, in this case, the power supply device 10 runs in the PICC detection mode. For example, the device 30 does not enter the detection area of the power supply device 10, and the control module 103 may control, in response to the detection result output by the sensor module 1021, the wireless power supply module 101 to continuously output the power supply signal with the first power to the power supply coil 14. In this case, the power supply device 10 runs in the power supply mode.

When the power supply device 10 runs in the PICC detection mode, for example, as shown in FIG. 4, the control module 103 may control the wireless power supply module 101 to output the power supply signal with the second power to the power supply coil 14. A carrier frequency of the power supply signal may be f_{WPT}. With reference to FIG. 2 and FIG. 4 together, the power supply device 10 provided in embodiments of this application can still provide the wireless power supply signal during the PICC detection. An amplitude of the wireless power supply signal is far greater than an amplitude of an NFC signal. This can ensure that, during the PICC detection, an electronic device 20 that is originally receiving power supply does not lose power supply, and greatly reduces impact of PICC detection on wireless power supply, to ensure wireless power supply efficiency. Then, as shown in FIG. 4, the control module 103 may control the wireless power supply module 101 to be disabled, enable the near field communication module 1022, and control the near field communication module 1022 to transmit a request signal for one or more times by using the NFC coil, so as to detect whether the device 30 is the PICC device.

For example, the near field communication module 1022 detects that the device 30 is the PICC device, and the control module 103 may control, in response to the detection result output by the near field communication module 1022, the wireless power supply module 101 to output the power supply signal with the third power to the power supply coil 14. In this case, the power supply device 10 runs in the PICC protection mode, to prevent the PICC from being damaged. For example, if the near field communication module 1022 receives the answer to request signal sent by the device 30, it may be determined that the device 30 is the PICC device.

For example, the near field communication module 1022 detects that the device 30 is not the PICC device, and the control module 103 may control, in response to the detection result output by the near field communication module 1022, the wireless power supply module 101 to output the power supply signal with the first power to the power supply coil 14. In this case, the power supply device 10 runs in the power supply mode. For example, if the near field communication module 1022 does not receive, within preset time, an answer to request signal sent by the device 30, it may be determined that the device 30 is not the PICC device.

For example, when the near field communication module 1022 does not detect whether that the device 30 is the PICC device, the control module 103 may control, in response to the detection result output by the near field communication module 1022, the wireless power supply module 101 to continuously output the power supply signal with the second power to the power supply coil 14. In this case, the power supply device 10 maintains the PICC detection mode. For example, if the near field communication module 1022 does not receive, after sending the request signal for the first time, the answer to request signal sent by the device 30, the control module 103 may control the near field communication module 1022 to send the request signal again, so as to detect again whether the device 30 is the PICC device.

In conclusion, the power supply device 10 in this embodiment of this application can detect a nearby PICC device in real time by using the sensor and the near field communication module, and switch to a different running mode based on the detection result. In addition, the power supply device 10 can provide the power supply signal with different power in different running modes. This flexibly meets power supply requirements in different running modes, avoids, during the PICC detection, a case in which charging of the electronic device is interrupted, ensures wireless power supply efficiency, without damaging the PICC, and greatly ensures user experience.

FIG. 6 is a schematic diagram of a structure of still another power supply device according to an embodiment of this application. The technical solutions in embodiments of this application may be specifically implemented in the structure shown in FIG. 6 or a similar structure. A power supply device 10 may be the power supply device 10 shown in FIG. 1. As shown in FIG. 6, the power supply device 10 may include a wireless power supply module 101, a sensor module 1021, a near field communication module 1022, and a control module 103. As shown in FIG. 6, the wireless power supply module 101 may specifically include a signal generator 11, a power amplifier 12, and a front-end circuit 13 that are sequentially connected. The front-end circuit 13 may be connected to a power supply coil 14. The near field communication module 1022 may specifically include a card reader chip 21 and a front-end circuit 22 that are sequentially connected. The front-end circuit 22 may be connected to an NFC coil 23.

The signal generator 11 of the wireless power supply module 101 is configured to generate a power supply signal. For example, the signal generator 11 may be implemented by a crystal oscillator, a microcontroller, a digital signal processor, or the like. The power amplifier 12 of the wireless power supply module 101 may be configured to amplify power of the power supply signal generated by the signal generator 11. For example, the front-end circuit 13 of the wireless power supply module 101 may include a matching network and a filtering network. The matching network may be configured to match input impedance to an input impedance range expected by the power amplifier 12, and the filtering network may be configured to filter out a harmonic wave of a wireless power supply signal, and the like. Details are not described herein again.

The card reader chip 21 of the near field communication module 1022 may be configured to send and read an NFC signal. For example, the card reader chip 21 may be configured to send a request signal and read an answer to request signal that is sent by the device 30. For example, the card reader chip 21 may be implemented by an integrated chip. For example, the front-end circuit 22 of the near field communication module 1022 may include a matching network and a filtering network. The matching network may be configured to match input impedance to an input impedance range expected by the card reader chip 21, and the filtering network may be configured to filter out an unexpected high-order harmonic wave in the NFC signal.

The power supply coil 14 is configured to: receive the power supply signal output by the front-end circuit 13, and generate a corresponding wireless power supply electromagnetic field, to implement wireless power supply.

The NFC coil 23 is configured to: receive an NFC signal output by the front-end circuit 22, and generate a corresponding NFC magnetic field, to implement data communication. The NFC coil 23 may be configured to: receive an NFC signal sent by the device 30, and transmit the signal to the card reader chip, to implement data communication.

As shown in FIG. 6, the control module 103 is separately connected to the wireless power supply module 101, the sensor module 1021, and the near field communication module 1022. For example, the control module 103 may be implemented by using a microcontroller, a digital signal processor, or the like. As described above, the control module 103 is mainly configured to control enabling and disabling of the wireless power supply module 101 and the near field communication module 1022, and control power of a power supply signal output by the wireless power supply module 101. In an implementation, the control module 103 may further control impedance detection on the wireless power supply module 101 and the near field communication module 1022, and the like.

It can be understood that the structure illustrated in this embodiment of this application does not constitute a specific limitation on the power supply device 10. In some possible embodiments, the power supply device 10 may have more or fewer components than those shown in FIG. 3, FIG. 5, and FIG. 6, or combine some components, or split some components, or have different component arrangements. Various components shown in the figure may be implemented in hardware including one or more signal processing and/or application-specific integrated circuits, software, or a combination of hardware and software. In addition, an interface connection relationship between the modules illustrated in this embodiment of this application is only an example for description, and does not constitute a limitation on the structure of the power supply device 10. In some possible embodiments, the power supply device 10 may alternatively use an interface connection manner different from that in the foregoing embodiment, or use a combination of a plurality of interface connection manners.

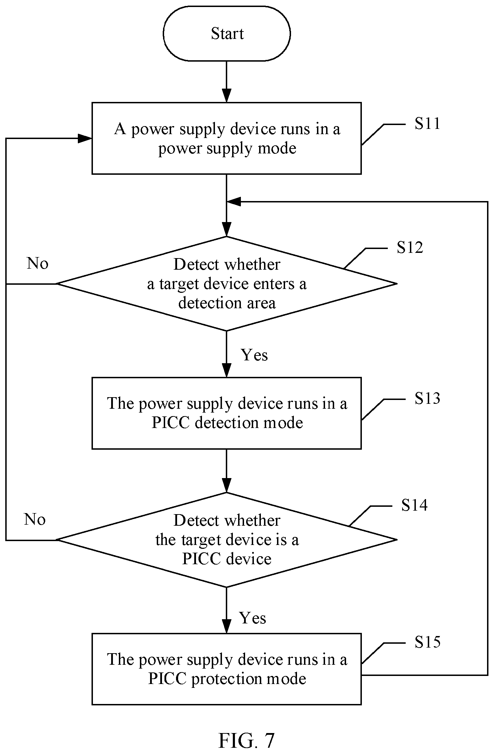

FIG. 7 is a schematic flowchart of a wireless power supply and PICC detection method according to an embodiment of this application. The method is applied to the application scenario described in FIG. 1, and may be specifically applied to the power supply device 10 described in FIG. 3, FIG. 5, and FIG. 6. The following describes in detail the wireless power supply and PICC detection method provided in this application by using an example in which an execution body is the power supply device 10. As shown in FIG. 7, the wireless power supply and PICC detection method may include the following step S11 to step S15.

Step S11: The power supply device runs in a power supply mode.

Specifically, the power supply device 10 runs in the power supply mode. In this case, the wireless power supply module 101 in the power supply device 10 provides a power supply signal with specific power to a power supply coil, so that the power supply coil generates a wireless power supply electromagnetic field to supply power to an electronic device 20.

In an implementation, the power supply device 10 runs in the power supply mode, and the wireless power supply module 101 may provide the power supply signal with first power to the power supply coil, so as to implement efficient power supply to one or more electronic devices 20.

For example, as shown in FIG. 6, the power supply device 10 runs in a power supply mode. The control module 103 controls the signal generator 11 in the wireless power supply module 101 to generate a power supply signal and output the power supply signal to the power amplifier 12. Power of the power supply signal output by the power amplifier 12 may be the first power. Then, the power supply signal with the first power is output to the power supply coil 14 after input impedance matching and filtering of the front-end circuit 13 in the wireless power supply module 101, so that the power supply coil 14 generates a corresponding wireless power supply electromagnetic field.

For example, after being started, the power supply device 10 may run in the power supply mode by default. For example, after being started, the power supply device 10 may be in a standby state by default. When the power supply device 10 senses that the electronic device 20 exists on a charging base of the power supply device 10, or when the power supply device 10 matches the electronic device 20 through Bluetooth, the power supply device 10 may run in the power supply mode, or the like.

Step S12: Detect whether a target device enters a detection area.

Specifically, whether the target device enters the detection area is detected, and in response to detection information output by the detection module 102, the power supply device 10 runs in a PICC detection mode or the power supply mode.

In an implementation, in response to a detection result output by the sensor module 1021 in the detection module 102, the power supply device 10 runs in the PICC detection mode or the power supply mode. The detection result indicates whether the target device enters the detection area of the power supply device 10.

For example, the sensor module 1021 detects that the target device enters the detection area, and in response to the detection result output by the sensor module 1021, the power supply device 10 runs in the PICC detection mode. For example, the sensor module 1021 detects that no target device enters the detection area, and in response to the detection result output by the sensor module 1021, the power supply device 10 runs in the power supply mode. For example, the sensor module 1021 fails to detect that the target device enters the detection area, and in response to the detection result output by the sensor module 1021, the power supply device 10 may run in the power supply mode.

For example, the sensor module 1021 may include one or more capacitive sensors. The one or more capacitive sensors may efficiently and conveniently detect, based on a change of a dielectric constant in the detection area, whether a device enters the detection area.

Step S13: Detect that the target device enters the detection area, where the power supply device runs in the PICC detection mode.

Specifically, the detection module 102 detects that the target device enters the detection area, and in response to the detection information output by the detection module 102, the power supply device runs in the PICC detection mode.

In an implementation, the sensor module 1021 in the detection module 102 detects that the target device enters the detection area, and in response to the detection result output by the sensor module 1021, the power supply device 10 runs in the PICC detection mode.

For example, the sensor module 1021 in the detection module 102 detects that the target device enters the detection area, and in response to the detection result output by the sensor module 1021, the control module 103 may control the wireless power supply module 101 to output the power supply signal with second power to the power supply coil 14. In addition, the control module 103 may further control the near field communication module 1022 to detect whether the target device is a PICC device. In this case, the power supply device 10 runs in the PICC detection mode. In an implementation, the target device is the device 30 in FIG. 1.

For example, as shown in FIG. 6, the power supply device 10 runs in a PICC detection mode. The controller 103 controls the signal generator 11 in the wireless power supply module 101 to generate a power supply signal and output the power supply signal to the power amplifier 12. Power of the power supply signal output by the power amplifier 12 may be the second power. Then, the power supply signal with the second power is output to the power supply coil 14 after input impedance matching and filtering of the front-end circuit 13 in the wireless power supply module 101, so that the power supply coil 14 generates a corresponding wireless power supply electromagnetic field. The second power may be less than or equal to the first power.

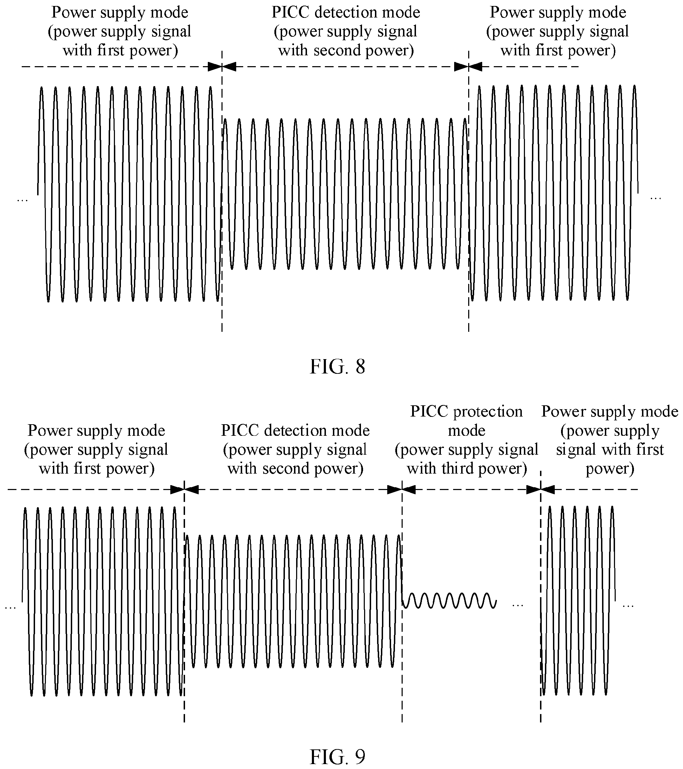

For example, FIG. 8 is a schematic diagram of a power change of a power supply signal according to an embodiment of this application. As shown in FIG. 8, the power supply device originally runs in a power supply mode, and the wireless power supply module 101 outputs the power supply signal with first power to the power supply coil 14. The detection module 102 detects that a target device enters a detection area, and in response to a detection result output by the detection module 102, the power supply device 10 immediately switches to a PICC detection mode, and the wireless power supply module 101 outputs the power supply signal with second power to the power supply coil 14. As shown in FIG. 8, the power supply device 10 switches from the power supply mode to the PICC detection mode, and power of the power supply signal provided by the wireless power supply module 101 may be reduced based on a preset amplitude.

Step S14: Detect whether the target device is a PICC device.

Specifically, the power supply device 10 runs in the PICC detection mode. The detection module 102 detects whether the target device that enters the detection area is the PICC device. In response to detection information output by the detection module 102, the power supply device 10 runs in a PICC protection mode, the power supply mode, or the PICC detection mode.

In an implementation, in response to a detection result output by the near field communication module 1022 in the detection module 102, the power supply device 10 runs in the PICC protection mode, the power supply mode, or the PICC detection mode. The detection result indicates whether the target device that enters the detection area is the PICC device.

For example, the near field communication module 1022 detects that the target device is the PICC device, and in response to the detection result output by the near field communication module 1022, the power supply device 10 runs in the PICC protection mode. For example, the near field communication module 1022 detects that the target device is not the PICC device, and in response to the detection result output by the near field communication module 1022, the power supply device 10 runs in the power supply mode. For example, the near field communication module 1022 fails to detect that the target device is the PICC device, and in response to the detection result output by the near field communication module 1022, the power supply device 10 may maintain the PICC detection mode.

For example, the target device is the device 30 shown in FIG. 1. As shown in FIG. 4, when the power supply device 10 runs in a PICC detection mode, the control module 103 may control, in a power supply phase of the PICC detection, the wireless power supply module 101 to provide a power supply signal with the second power within a period of time such as 4 ms, 4.3 ms, 5 ms, or the like to the power supply coil, so as to supply power to the electronic device 20 and the device 30. Then, in a detection phase of the PICC detection, the control module 103 disables the wireless power supply module 101, enables the near field communication module 1022, and controls the near field communication module 1022 to transmit a request signal for one or more times, so as to detect whether the device 30 is the PICC device.

For example, as shown in FIG. 6, the power supply device 10 runs in a PICC detection mode. The controller 103 controls the card reader chip 21 in the near field communication module 1022 to generate the request signal. The request signal is output to the NFC coil 23 after input impedance matching and filtering of the front-end circuit 13 in the near field communication module 1022. The NFC coil 23 generates a corresponding NFC magnetic field based on the request signal, and attempts to perform data communication with the device 30 to detect whether the device 30 is the PICC device.

For example, if the device 30 is the PICC device, the device 30 may send a corresponding answer to request signal through power supply received in the PICC power supply phase. The near field communication module 1022 receives the answer to request signal sent by the device 30, and determines that the device 30 is the PICC device. The control module 103 may control, in response to the detection result output by the near field communication module 1022, the wireless power supply module 101 to output a power supply signal with third power to the power supply coil 14. In this case, the power supply device 10 runs in the PICC protection mode. FIG. 9 is a schematic diagram of a power change of another power supply signal according to an embodiment of this application. As shown in FIG. 9, when the power supply device 10 runs in a PICC detection mode, the wireless power supply module 101 outputs a power supply signal with second power to the power supply coil 14. If the near field communication module 1022 detects that the device 30 is a PICC device, the power supply device 10 may switch from the PICC detection mode to a PICC protection mode, and the wireless power supply module 101 outputs the power supply signal with third power to the power supply coil 14. As shown in FIG. 9, the power supply device 10 switches from the PICC detection mode to the PICC protection mode, and power of the power supply signal provided by the wireless power supply module 101 may be reduced based on a preset amplitude.

For example, if the near field communication module 1022 does not receive, within preset time, an answer to request signal sent by the device 30, it may be determined that the device 30 is not the PICC device. The control module 103 may control, in response to a detection result output by the near field communication module 1022, the wireless power supply module 101 to output the power supply signal with first power to the power supply coil 14. In this case, the power supply device 10 runs in a power supply mode. For example, as shown in FIG. 8, the power supply device 10 runs in a PICC detection mode, and the wireless power supply module 101 outputs a power supply signal with the second power to the power supply coil 14. If the near field communication module 1022 detects that the device 30 is not the PICC device, the power supply device 10 may switch back from a PICC detection mode to the power supply mode, and the wireless power supply module 101 outputs the power supply signal with the first power to the power supply coil 14.

For example, if the near field communication module 1022 does not receive, after sending a request signal for the first time, an answer to request signal sent by the device 30, that is, fails to detect that the device 30 is the PICC device, the control module 103 may control, in response to the detection result output by the near field communication module 1022, the wireless power supply module 101 to continuously output the power supply signal with the second power to the power supply coil 14. In this case, the power supply device 10 maintains the PICC detection mode. The control module 103 may control the near field communication module 1022 to send the request signal again, so as to detect again whether the device 30 is a PICC.

Step S15: Detect that the target device is the PICC device, and the power supply device runs in a PICC protection mode.

Specifically, the detection module 102 detects that the target device is the PICC device, and in response to detection information output by the detection module 102, the power supply device runs in the PICC protection mode.

In an implementation, the near field communication module 1022 in the detection module 102 detects that the target device is the PICC device, and in response to the detection result output by the near field communication module 1022, the power supply device 10 runs in the PICC protection mode.

For example, the near field communication module 1022 in the detection module 102 detects that the target device is the PICC device, and the control module 103 may control, in response to the detection result output by the near field communication module 1022, the wireless power supply module 101 to output the power supply signal with the third power to the power supply coil 14. In this case, the power supply device 10 runs in the PICC protection mode. For example, as shown in FIG. 9, the power supply device 10 runs in the PICC detection mode, and the wireless power supply module 101 outputs the power supply signal with the second power to the power supply coil 14. If the near field communication module 1022 detects that the device 30 is the PICC device, the power supply device 10 may switch from the PICC detection mode to the PICC protection mode, and the wireless power supply module 101 outputs the power supply signal with the third power to the power supply coil 14. As shown in FIG. 9, the power supply device 10 switches from the PICC detection mode to the PICC protection mode, and the power of the power supply signal provided by the wireless power supply module 101 may be reduced based on the preset amplitude.

For example, as shown in FIG. 6, the power supply device 10 runs in a PICC protection mode. The controller 103 controls the signal generator 11 in the wireless power supply module 101 to generate a power supply signal and output the power supply signal to the power amplifier 12. Power of the power supply signal output by the power amplifier 12 may be the third power. Then, the power supply signal with the third power is output to the power supply coil 14 after input impedance matching and filtering of the front-end circuit 13 in the wireless power supply module 101, so that the power supply coil 14 generates a corresponding wireless power supply electromagnetic field. The third power may be greater than or equal to 0, and is less than the second power. For example, that the third power is 0 is equivalent to that the wireless power supply module does not provide a power supply signal to the power supply coil, that is, is equivalent to that the wireless power supply module 101 is disabled. As described above, in the PICC protection mode, the power supply device 10 may weaken or even disable wireless power supply. This prevents the PICC from being damaged, prolongs a service life of the PICC device, and ensures use experience and property safety.

In an implementation, as shown in FIG. 7, when the power supply device 10 runs in a PICC protection mode, the detection module 102 may continuously run, to detect in real time whether a target device enters the detection area, so as to discover a PICC device that may exist nearby in time. In response to the detection information output by the detection module 102, the power supply device 10 may maintain a previous power supply mode or switch to a PICC detection mode or a PICC protection mode. For example, as shown in FIG. 9, if it is subsequently detected that no PICC device exists in the detection area, the power supply device 10 may switch from the PICC protection mode to the power supply mode, and the wireless power supply module 101 outputs the power supply signal with the first power to the power supply coil 14.

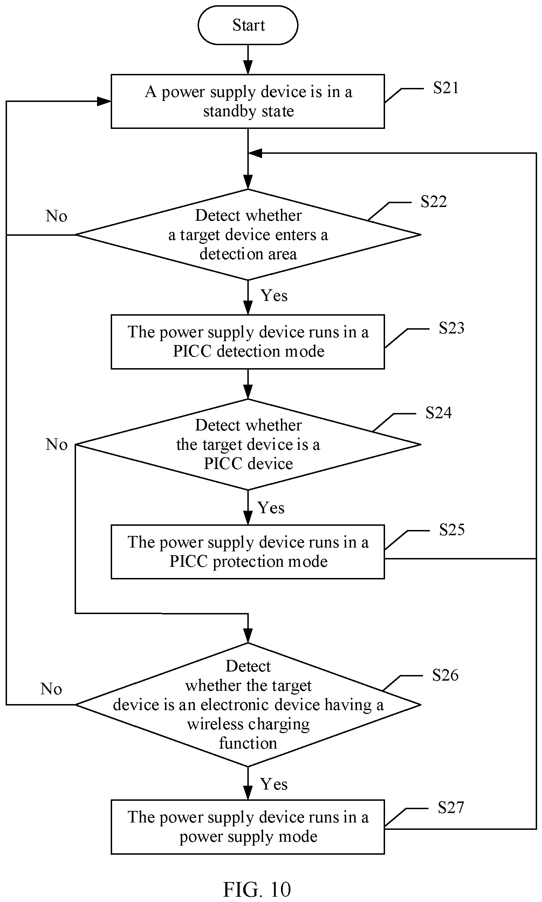

FIG. 10 is a schematic flowchart of another wireless power supply and PICC detection method according to an embodiment of this application. The method is applied to the application scenario described in FIG. 1, and may be specifically applied to the power supply device 10 in FIG. 3, FIG. 5, and FIG. 6. The following further describes in detail the wireless power supply and PICC detection method provided in this application by using an example in which an execution body is the power supply device 10. As shown in FIG. 10, the method may include the following step S21 to step S27.

Step S21: The power supply device is in a standby state.

Specifically, the power supply device is in the standby state, and does not perform wireless power supply or near field communication.

In an implementation, when the power supply device 10 is in the standby state, the wireless power supply module 101 and the near field communication module 1022 in the power supply device 10 may be in a disabled state, and the sensor module 1021 in the power supply device 10 may be in a running state, to monitor in real time whether a device enters a detection area of the power supply device 10.

For example, after being started, the power supply device 10 may be in the standby state by default, and the power supply device 10 may enable the wireless power supply module 101 when a user manually enables wireless power supply, the power supply device 10 senses that an electronic device 20 exists on a charging base of the power supply device 10, or matches, through Bluetooth, the electronic device 20 that can be wirelessly charged.

Step S22: Detect whether a target device enters a detection area.

Specifically, for step S22, refer to step S12 in the embodiment corresponding to FIG. 7. Details are not described herein again.

In an implementation, the target device is a device other than the power supply device 10.

Step S23: Detect that the target device enters the detection area, where the power supply device runs in the PICC detection mode.

Specifically, for step S23, refer to step S13 in the embodiment corresponding to FIG. 7. Details are not described herein again.

In an implementation, the power supply device 10 switches from the standby state to the PICC detection mode, and the control module 103 may also continue to maintain the wireless power supply module 101 disabled, enable the near field communication module 1021, and control the near field communication module 1022 to transmit an NFC signal for a period of time to supply power to the target device, so as to protect a possible PICC device from being damaged to a maximum extent.

Step S24: Detect whether the target device is a PICC device.

Specifically, for step S24, refer to step S14 in the embodiment corresponding to FIG. 7. Details are not described herein again.

In an implementation, the power supply device 10 is originally in the standby state. If it is detected that the target device is not the PICC device, the power supply device 10 may further detect whether the target device is an electronic device having a wireless charging function. For example, the target device may be the electronic device 20 shown in FIG. 1, for example, the electronic device that has the wireless charging function, such as a mobile phone, a Bluetooth headset, or a tablet computer.

Step S25: Detect that the target device is the PICC device, and the power supply device runs in a PICC protection mode.

Specifically, for step S25, refer to step S15 in the embodiment corresponding to FIG. 7. Details are not described herein again.

Step S26: Detect whether the target device is the electronic device having the wireless charging function.

Specifically, if the detection module 102 detects that the target device is not the PICC device, the detection module 102 may further detect whether the target device is the electronic device having the wireless charging function.

In an implementation, in response to detection information output by the detection module 102, the power supply device 10 maintains the standby state or runs in the power supply mode.

For example, the detection module 102 detects that the target device is the electronic device having the wireless charging function, and in response to the detection information output by the detection module 102, the power supply device 10 runs in the power supply mode. In this way, in this embodiment of this application, wireless power supply to the electronic device can be implemented under the premise of ensuring that the PICC is not damaged. For example, the detection module 102 detects that the target device is not the electronic device having the wireless charging function, and in response to the detection information output by the detection module 102, the power supply device 10 maintains the standby state, to save energy as much as possible.

For example, the detection module 102 may further include a Bluetooth communication module, and may detect, by using a method such as Bluetooth matching, whether the target device is the electronic device having the wireless charging function.

Step S27: Detect that the target device is the electronic device having the wireless charging function, and the power supply device runs in the power supply mode.

Specifically, the detection module 102 detects that the target device is the electronic device having the wireless charging function, and in response to the detection information output by the detection module 102, the power supply device runs in the power supply mode.

In an implementation, the Bluetooth communication module in the detection module 102 detects that the target device is the electronic device having the wireless charging function, and in response to detection information output by the Bluetooth communication module, the power supply device 10 runs in the power supply mode.

For example, the Bluetooth communication module in the detection module 102 detects that the target device is the electronic device having the wireless charging function, and the control module 103 may control, in response to the detection information output by the Bluetooth communication module, the wireless power supply module 101 to output a power supply signal with first power to the power supply coil 14. In this case, the power supply device 10 runs in the power supply mode.

For example, as shown in FIG. 6, the power supply device 10 runs in the power supply mode. The control module 103 controls the signal generator 11 in the wireless power supply module 101 to generate a power supply signal and output the power supply signal to the power amplifier 12. Power of the power supply signal output by the power amplifier 12 may be the first power. Then, the power supply signal with the first power is output to the power supply coil 14 after input impedance matching and filtering of the front-end circuit 13 in the wireless power supply module 101, so that the power supply coil 14 generates a corresponding wireless power supply electromagnetic field. This can implement efficient power supply to the target device.

In an implementation, as shown in FIG. 10, the power supply device 10 runs in the power supply mode, and the detection module 102 may continuously run, to detect in real time whether the target device enters the detection area, so as to discover a PICC device and an electronic device that may exist nearby in time. In response to the detection information output by the detection module 102, the power supply device 10 may maintain a current power supply mode or switch to any one of the standby state, the PICC detection mode, or the PICC protection mode.

In this embodiment of this application, each method procedure in the wireless power supply and PICC detection method described in FIG. 7 or FIG. 10 may be specifically implemented based on software, hardware, or a combination thereof. A logic circuit, an algorithm circuit, an analog circuit, or the like can be included in a hardware implementation. A program instruction may be included in a software implementation, and may be considered as a software product, and may be stored in a memory, and may be run by a processor to implement a related function.

In conclusion, embodiments of this application provide the power supply device that supports wireless power supply and near field communication. The power supply device includes a plurality of running modes such as the power supply mode, the PICC detection mode, and the PICC protection mode. Based on this, the wireless power supply module in the power supply device can provide the power supply signal with different power to the power supply coil in different running modes, so that the power supply coil generates magnetic fields with different strengths. This can flexibly meet power supply requirements in different cases. In this way, when performing the PICC detection, the power supply device can also continuously generate the wireless power supply electromagnetic field, so as to continuously perform wireless power supply to the current electronic device. This avoids a case in which charging of the electronic device is interrupted during the PICC detection. In conclusion, the power supply device provided in this embodiment of this application can ensure PICC detection efficiency without damaging a PICC, and ensure wireless power supply efficiency. This greatly meets user's requirements.

An embodiment of this application further provides a computer-readable storage medium. The computer-readable storage medium may store a program. When the program is executed by a processor, the processor is enabled to perform some or all of steps described in any one of the foregoing method embodiments.

An embodiment of this application further provides a computer program. The computer program includes instructions. When the computer program is executed by a multi-core computer, the processor is enabled to perform some or all of the steps described in any one of the foregoing method embodiments.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions, because according to this application, some steps can be performed in other orders or simultaneously. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A power supply device that supports wireless power supply and near field communication, comprising a wireless power supply module, a power supply coil, and a detection module, wherein the wireless power supply module is configured to provide a power supply signal to the power supply coil, and the power supply coil supplies power to an electronic device by using the power supply signal; the detection module is configured to: detect whether a target device exists in a detection area of the power supply device, and detect whether the target device is a PICC device; and running modes of the power supply device comprise a power supply mode, a PICC detection mode, and a PICC protection mode;
when the power supply device runs in the power supply mode, in response to detection information output by the detection module, the power supply device switches the running mode from the power supply mode to the PICC detection mode or the PICC protection mode;
when the power supply device separately runs in the power supply mode, the PICC detection mode, and the PICC protection mode, the wireless power supply module provides the power supply signal with power in descending order to the power supply coil; and
the target device is a device other than the power supply device and the electronic device.

2. The power supply device according to claim 1, wherein in response to that the power supply device runs in the power supply mode, the wireless power supply module provides the power supply signal with first power to the power supply coil;
in response to that the power supply device runs in the PICC detection mode, the wireless power supply module provides the power supply signal with second power to the power supply coil;
in response to that the power supply device runs in the PICC protection mode, the wireless power supply module provides the power supply signal with third power to the power supply coil; and
the first power is greater than the second power, and the second power is greater than the third power.

3. The power supply device according to claim 1 or 2, wherein the detection information output by the detection module indicates:
whether the target device other than the power supply device and the electronic device exists in the detection area; or
whether the PICC device exists in the detection area of the power supply device.

4. The power supply device according to any one of claims 1 to 3, wherein in response to that the target device exists in the detection area, the detection module outputs the detection information indicating the power supply device to run in the PICC detection mode; and
in response to that no target device exists in the detection area, the detection module outputs the detection information indicating the power supply device to run in the power supply mode.

5. The power supply device according to any one of claims 1 to 3, wherein in response to that the target device is the PICC device, the detection module outputs the detection information indicating the power supply device to run in the PICC protection mode; and
in response to that the target device is not the PICC device, the detection module outputs the detection information indicating the power supply device to run in the power supply mode.

6. The power supply device according to any one of claims 1 to 5, wherein the detection module comprises:
a sensor module, configured to: detect whether the target device other than the power supply device and the electronic device exists in the detection area, and output a sensor detection signal; and
a near field communication module, configured to: detect whether the target device in the detection area is the PICC device, and output a near field communication module detection signal.

7. The power supply device according to claim 6, wherein the detection module is configured to:
in response to the sensor detection signal, the detection module output the detection information indicating the power supply device to run in the PICC detection mode or the power supply mode; and
in response to the near field communication module detection signal, the detection moduleoutput the detection information indicating the power supply device to run in the PICC protection mode or the power supply mode.

8. The power supply device according to claim 6, wherein the detection information comprises at least one of the sensor detection signal and the near field communication module detection signal, wherein
in response to that the detection information comprises the sensor detection signal, the power supply device runs in the PICC detection mode or the power supply mode; and
in response to that the detection information comprises the near field communication module detection signal, the power supply device runs in the PICC protection mode or the power supply mode.

9. The power supply device according to claim 8, wherein in response to that the detection information comprises the sensor detection signal, the wireless power supply module provides the power supply signal with the first power or the second power to the power supply coil; and
in response to that the detection information comprises the near field communication module detection signal, the wireless power supply module provides the power supply signal with the first power or the third power to the power supply coil.

10. The power supply device according to any one of claims 1 to 9, wherein the power supply device further comprises:
a control module, configured to control, in response to the detection information output by the detection module, the power supply device to run in the power supply mode, the PICC detection mode, or the PICC protection mode.

11. The power supply device according to claim 10, wherein the control module is configured to:
in response to that the detection information comprises the sensor detection signal, the control module control the power supply device to run in the PICC detection mode or the power supply mode; and
in response to that the detection information comprises the near field communication module detection signal, the control module control the power supply device to run in the PICC protection mode or the power supply mode.

12. The power supply device according to claim 10, wherein the control module is configured to:
in response to that the detection information comprises the sensor detection signal, the control module control the wireless power supply module to provide the power supply signal with the first power or the second power to the power supply coil; and
in response to that the detection information comprises the near field communication module detection signal, the control module control the wireless power supply module to provide the power supply signal with the first power or the third power to the power supply coil.

13. A power supply device that supports wireless power supply and near field communication, comprising a wireless power supply module, a power supply coil, a detection module, and a control module, wherein
the wireless power supply module is configured to provide a power supply signal to the power supply coil, and the power supply coil supplies power to an electronic device by using the power supply signal;
the detection module is configured to: detect whether a target device exists in a detection area of the power supply device, and detect whether the target device is a PICC device; and
the control module is configured to:
control the wireless power supply module to provide the power supply signal with first power to the power supply coil; and
control, in response to detection information output by the detection module, the wireless power supply module to provide the power supply signal with second power or third power to the power supply coil; and
the target device is a device other than the power supply device and the electronic device, the first power is greater than the second power, and the second power is greater than the third power.

14. The power supply device according to claim 13, wherein the detection module comprises a sensor module and a near field communication module, wherein
the sensor module is configured to detect whether the target device exists in the detection area;
the near field communication module is configured to detect whether the target device in the detection area is the PICC device; and
the detection module is configured to output the detection information based on a detection result of the sensor module or the near field communication module, and the detection information indicates whether the target device exists in the detection area or indicates whether the target device is the PICC device.

15. The power supply device according to claim 13 or 14, wherein the control module is configured to:
control, in response to that the detection information indicates that the target device exists in the detection area, the wireless power supply module to provide the power supply signal with the second power to the power supply coil; and
control, in response to that the detection information indicates that the target device is the PICC device, the wireless power supply module to provide the power supply signal with the third power to the power supply coil.
